Europäisches Patentamt

European Patent Office

Office européen des brevets

(19)

(11) Publication number: **0 079 588**
**A2**

# (12) EUROPEAN PATENT APPLICATION

(21) Application number: **82110421.3**

(22) Date of filing: **11.11.82**

(51) Int. Cl.³: **B 60 C 9/20**

(30) Priority: **12.11.81 US 320265**
**12.11.81 US 320266**

(43) Date of publication of application:
**25.05.83 Bulletin 83/21**

(84) Designated Contracting States:
**DE FR GB IT LU**

(71) Applicant: **The B.F. GOODRICH Company**
**Dept. 0015 WHB-6 500 South Main Street**
**Akron, Ohio 44318(US)**

(72) Inventor: **Derian, Gary Arris**
**15603 Galemore Drive**
**Middleburg Heigths Ohio 44130(US)**

(72) Inventor: **Luckenbach, Thomas Alexander**
**2907 Lee Road**
**Cuyahoga Falls Ohio 44224(US)**

(74) Representative: **von Kreisler, Alek, Dipl.-Chem. et al,**
**Deichmannhaus am Hauptbahnhof**
**D-5000 Köln 1(DE)**

(54) Pneumatic tire and method of making same.

(57) An improved radial tire is provided in accordance with this invention by having a circumferential belt comprising at least two plies of rubber-coated fiberglass cords with the cords in each ply parallel to each other and at an angle to the circumferential central plane of the tire and with the cords in one ply extending in a direction opposite to the cords in the adjacent ply, wherein each said belt ply has at least one marginal edge that is folded and wherein there is optionally disposed radially outward of said circumferential belt and radially inward of the tire tread a cap band having at least one layer of textile cors, said textile cords being essentially parallel to the circumferential central plane of the tire and said cap band having a width approximately equal to the width of the belt.

FIG. 1

Pneumatic Tire and Method of
making same

This invention relates to pneumatic tires and particularly to high-performance radial pneumatic tires.

The advantages of incorporating circumferential
belts in pneumatic tires are well known in the art.
These belt assemblies in tires usually include one or
more annular layers or "plies" of rubberized cords of
metal, glass, or natural or synthetic textiles such as
rayon, aromatic polyamide, or the like.

Recently, tire belt assemblies have been designed
to include folded plies of rubberized cord with the
ply folds usually disposed along the lateral edges of
the belt assembly. These folded ply type belt assemblies are considered advantageous for high-performance
tires. Folded belts offer improvements in high-speed
performance and in handling properties of the tire.
Durability of the tire is greatly improved with folded
belts, especially noted in less "belt edge separation"
problems. Belt edge separation is descriptive of the
tendencies of the cut edges of belt plies to pull away
or separate from the tire carcass from adjacent belt
plies, or both.

When the folded belt ply is reinforced with steel
cords, fabrication, handling and assembling of these
belt constructions is found to be difficult, principally due to the high resistance to bending or folding
commonly encountered in typical steel cord reinforced
plies. Thus, while a steel cord reinforced folded ply
obviously is capable of significantly contributing to the overall strength and stiffness of the belt assembly, problems of handling, assembling, etc. many times make steel reinforced folded plies impractical. On the other hand, synthetic textile cord materials of the type commonly used as tire reinforcing members (e.g. rayon, polyester, nylon or the like), are easily folded when in rubberized ply form. Such plies, however, have much less contributing effect upon the strength and stiffness of the belt assembly as a whole due to the relatively low tensile strength and/or stretch resistance of the cords used therein.

Fiberglass, because of its weight and cost advantage over steel has been increasingly accepted as a belt reinforcement for radial tires. Cut fiberglass belts have been used for reinforcing radial tires for some time, mainly because of the high modulus exhibited by fiberglass cords. The use of fiberglass for tire belts has been slowed because of the tendency of glass to break under certain types of driving conditions and of the inability heretofore to produce folded belt tires with fiberglass.

It is desirable to have a radial tire with fiberglass belt reinforcement which has superior performance to fiberglass belted radial tires with cut belts.

An object of the invention is to provide an improved fiberglass belted radial tire. More particularly, an object of the invention is to improve the high-speed performance, durability, glass breakage resistance and handling properties of a fiberglass belted radial tire.

These, and other objects, which will become evident from the following description, are attained in accordance with this invention by having a radial tire with a circumferential belt comprising at least two plies of rubber-coated fiberglass cords with the cords in each ply parallel to each other and at an angle to the circumferential central plane of the tire and with the tire cords in one ply extending in a direction opposite to the cords in the adjacent ply, wherein each said belt ply has at least one marginal edge that is folded.

A further object in accordance with this invention is attained by a radial tire of the kind just described above wherein there is disposed radially outward of said circumferential belt and radially inward of the tire tread a cap band having at least one layer of textile cords, said textile cords being essentially parallel to the circumferential central plane of the tire and said cap band having a width approximately equal to the width of the belt.

Figure 1 is a cross-sectional view of a radial passenger car tire incorporating an embodiment of the invention. The belt is a folded fiberglass belt having alternating cord angle in the shoulder region of the tire.

Figure 2 is a perspective view showing the folded tire belt plies of Fig. 1. Also shown is a diagrammatic plan view directly below the ply illustrating the cord direction of the cords in their respective plies.

Figure 3 is a cross-sectional view of a radial passenger car tire incorporating another embodiment of the invention. The belt is folded such that the folded end of each belt ply terminates radially inward of the outermost belt ply and radially outward of the innermost belt ply.

Figure 4 is a perspective view showing the folded tire belt plies of Fig. 3. Also shown is a diagrammatic plan view directly below the ply illustrating the cord direction of the cords in their respective plies.

Fig. 5 is a cross-sectional view of a radial passenger car tire incorporating an embodiment of the invention. The belt is a folded fiberglass belt and there is a cap band shown having two layers of textile cords.

Fig. 6 is a cross-sectional view of a radial passenger car tire incorporating another embodiment of the invention. The belt is a folded fiberglass belt and there is a cap band shown having one layer of textile cords.

This invention can be used in any kind or size of pneumatic radial tire, but since a large number of tires are made for passenger cars, the invention is illustrated in connection with a radial-cord, tubeless, passenger-car tire.

Pneumatic tires generally consist of a flexible-cord carcass or body to resist the pressure of the inflation gas, terminated at each side edge by a bead which engages the rim of a wheel. The cords are embedded in rubber, and are protected from abrasion by tread and sidewall rubber, and are made to hold air by preferably having an integral essentially air-impervious liner on the interior of the carcass.

It has been found, quite unexpectedly, that folded
tire belts could be produced with rubberized fiberglass cords. Fiberglass was always thought, by skilled
in the art, to be too brittle to be folded, and others
have thought that, even if fiberglass were capable of
being folded, then the glass cords would certainly
break during normal tire service.

The invention can be further described in terms of
presently preferred embodiment, and with reference to
several figures wherein like reference characters refer
to like features or components.

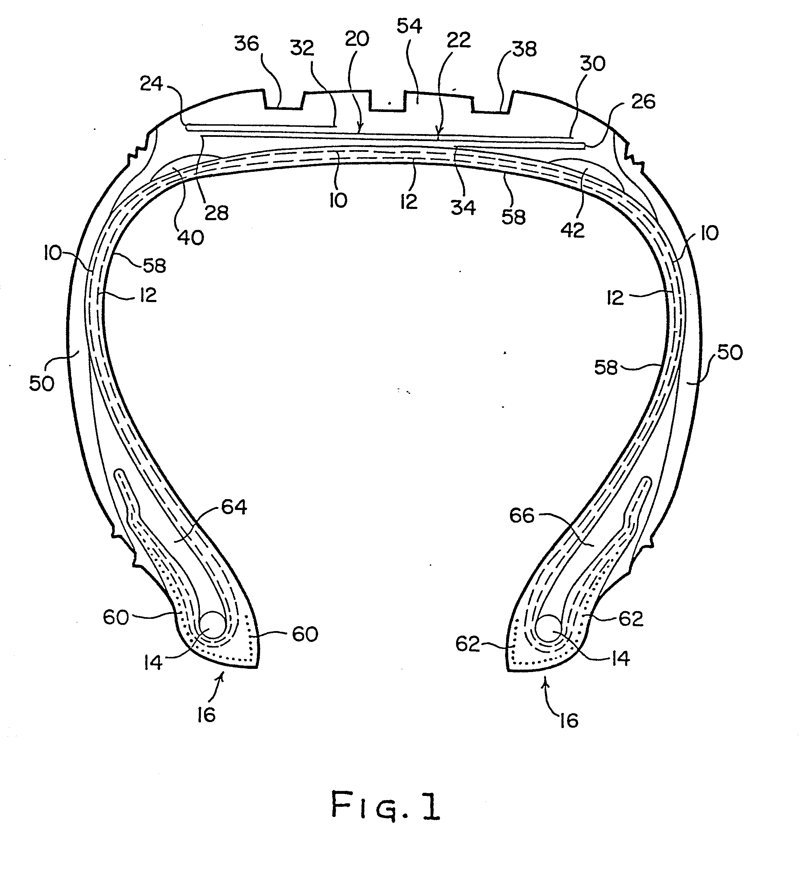

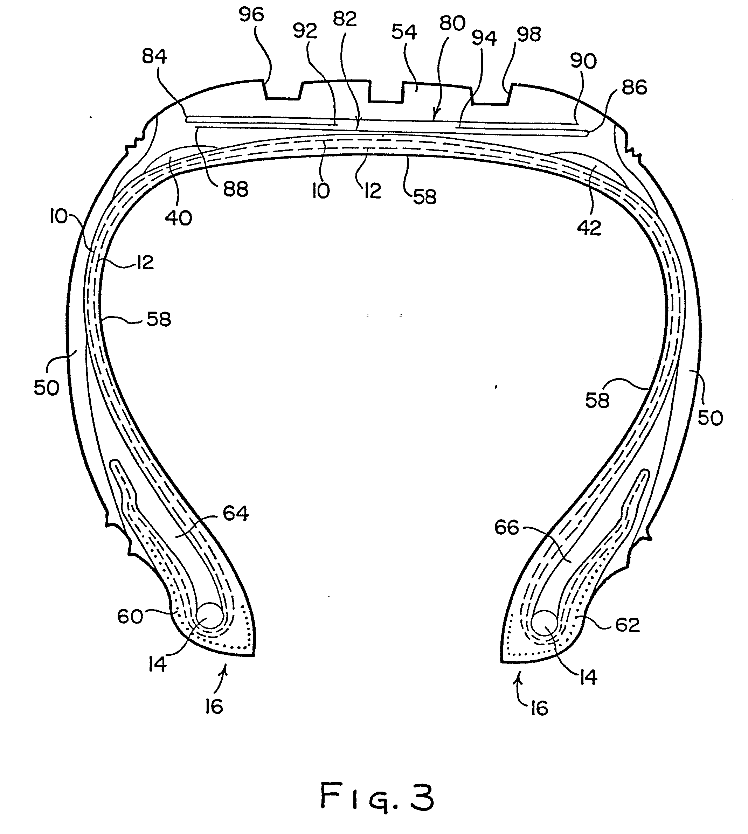

In the drawing (Fig. 1), two plies of carcass cords
10 and 12, which may be high-tenacity rayon, polyester
or other suitable material, lie with the individual
rubberized cords essentially in radial planes. The
edges of the plies are suitably wrapped around inextensible bead grommets 14 forming part of the molded
beads 16 shaped for engagement with a standard rim.

The radial cord plies 10 and 12 in the crown of
the tire, which is the region capable of engaging the
road, are surrounded by a folded circumferential fiberglass belt which, in this instance, is shown as consisting of two folded plies 20 and 22. The cords in
each ply are parallel to each other and at an angle to
the circumferential central plane of the tire, and the
cords in ply 20 extend in a direction opposite to the
cords in ply 22. The marginal edge 24 and 26 of plies
20 and 22 respectively is a folded edge. The folded
marginal edge, 24 and 26, of ply 20 and 22, is located
from 0.5 to 2.0 cm axially outward of the cut end (28
and 30), of ply 22 and 20 respectively. It is necessary to have the axially outermost part of the belt be
a folded edge to enhance durability. Folded edges have less tendency to separate from the rubber coating than do cut edges. The belt plies 20 and 22 of Fig. 1 are folded such that adjacent layers of belt plies are alternating in cord angle in the shoulder region of the tire. When the alternating layers in the shoulder region have different cord angles, there is more reinforcement and, therefore, a stiffer shoulder area of the tire. The stiffness results in improved handling properties in the tire.

The folded end 32 and 34 of belt ply 20 and 22, respectively, terminates at a point axially inward of outermost groove 36 and 38. This is beneficial in improving glass breakage resistance. Under certain driving conditions (e.g. low speeds and frequent turning), glass cords have a tendency to break under the outermost grooves; therefore, by ending the folded ply axially inward of the groove, the belt is stiffer in the area of the groove, thereby resulting in less flexing and less glass breakage.

Belt plies 20 and 22 have a cord angle of from 15 to 25 degrees relative to the circumferential centerline of the tire. If the angle is lower than 15 degrees, then the belt is not stiff enough to resist deflection in shoulder region; and, if greater than 25 degrees, then the fold is too sharp, thereby leading to glass breakage at the fold or the fold area.

A pair of belt-edge cushions 40 and 42 are located radially inward of the belt edges. The belt-edge cushions 40 and 42 are made from suitable rubber compounds which are well known in the art.

A protective layer of rubber completely surrounds the tire. This is preferably composed of a moderate thickness of sidewall rubber 50 in the zones where intense flexing occurs, and a thick layer of tread rubber 54 for resisting road wear. The tread layer has a suitable nonskid pattern of slits, slots, grooves, and the like.

On the inner face of the tire is a liner 58 composed of a rubber material having resistance to diffusion of air such as butyl rubber, or halogenated butyl rubber, and/or blends thereof, and extending from one bead 16 to the other bead so as to seal against the rim and minimize the loss of inflation gas or its penetration into the body of the tire.

Located in the bead area of the tire is a pair of non-wicking finishing strips 60 and 62. These finishing strips serve to prevent bead chafing and to further stiffen the bead area and lower sidewall of the tire. Also located in the bead area are bead fillers 64 and 66. These fillers serve to increase lower sidewall stiffness, thereby giving improved vehicle handling properties.

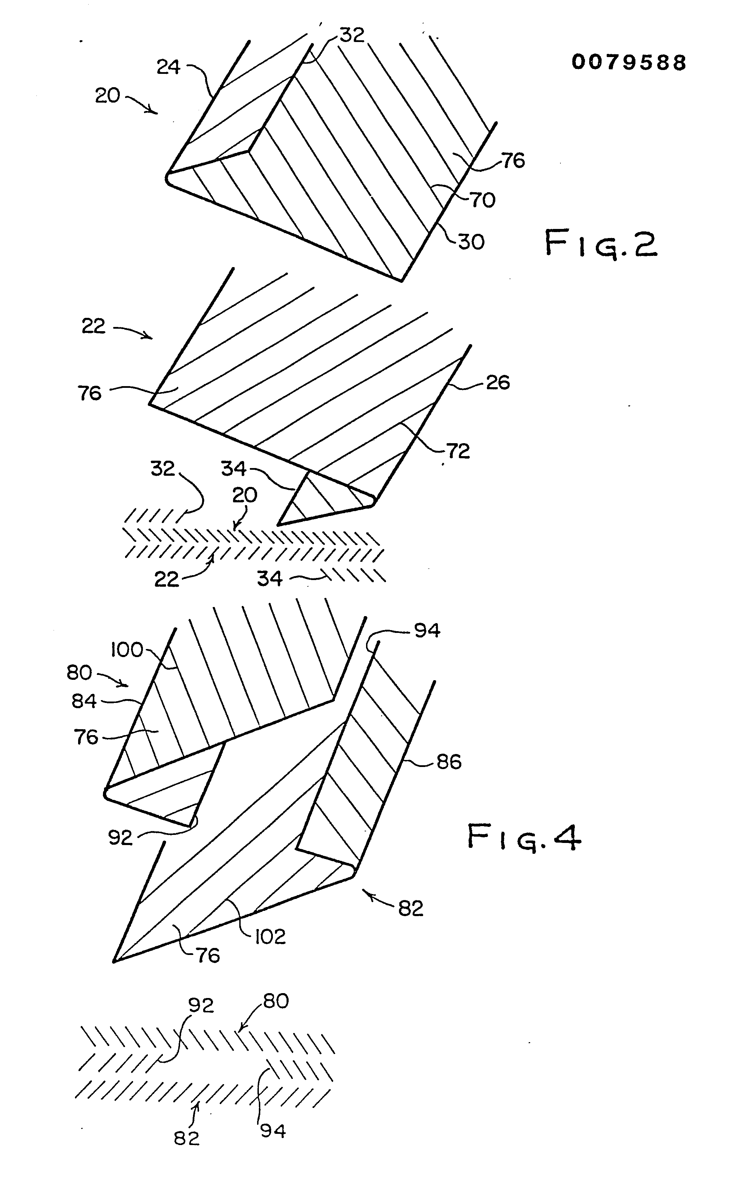

In Fig. 2 there is shown the folded fiberglass belt plies 20 and 22 of Fig. 1 . The cords in each ply are parallel to other cords in the same ply and run at an angle to the circumferential central plane of the tire. Cords 70 in ply 20 are at opposite angles to cords 72 in ply 22. Each cord is surrounded by a rubber composition 76 having a 300 % modulus (tensile stress at 300 % elongation) of at least 1500 psi and, preferably, at least 1800 psi as measured by ASTM D412.

In Fig. 2 plies 20 and 22 are shown folded in such a way that the three layers of cords on the edges run at alternating angles to the adjacent layer. This configuration adds stiffness in the shoulder of the tire. Fig. 2 also shows, directly below ply 22, a diagrammatic plan view illustrating the alternating cord direction of the cords in their respective plies.

In Fig. 3 there is shown a tire section similar to that of Fig. 1 except for the type of fold in the fiberglass belt. The belt in Fig. 3 consists of two folded fiberglass plies 80 and 82. The cords in each ply are parallel to each other, and at an angle to the circumferential central plane of the tire, and the cords in ply 80 extend in a direction opposite to the cords in ply 82. The marginal edge 84 and 86 of plies 80 and 82, respectively, is a folded edge. The folded marginal edge, 84 and 86, of plies 80 and 82, is located from 0.5 to 2.0 cm axially outward of the cut end, 88 and 90, of plies 82 and 80 respectively. The belt plies 80 and 82 of Fig. 3 are folded such that the folded ends 92 and 94 terminate radially inward of ply 80 and radially outward of ply 82.

The folded end (92 and 94) of belt plies 80 and 82, respectively, terminate at a point axially inward of outermost groove 96 and 98.

Belt plies 80 and 82 have a cord angle of from 15 to 25 degrees relative to the circumferential centerline of the tire.

In Fig. 4 there is shown the folded fiberglass belt plies 80 and 84 of Fig. 3. The cords in each ply are parallel to other cords in the same ply and run at an angle to the circumferential central plane of the tire. Cords 100 in ply 80 are at opposite angles to cords 102 in ply 82. In Fig. 4 plies 80 and 82 are shown folded in such a way that the folded ends 92 and 94 terminate radially inward of ply 80 and radially outward of ply 82. Fig. 4 also shows, directly below ply 82, a diagrammatic plan view illustrating the cord direction of the cords in their respective plies.

It has been furthermore found that a high-performance radial tire could be made using fiberglass belts. This unique tire is made by using folded fiberglass belts and disposed radially outward of the belts is a cap band having at least one layer of textile cords that are essentially parallel to the circumferential central plane of the tire.

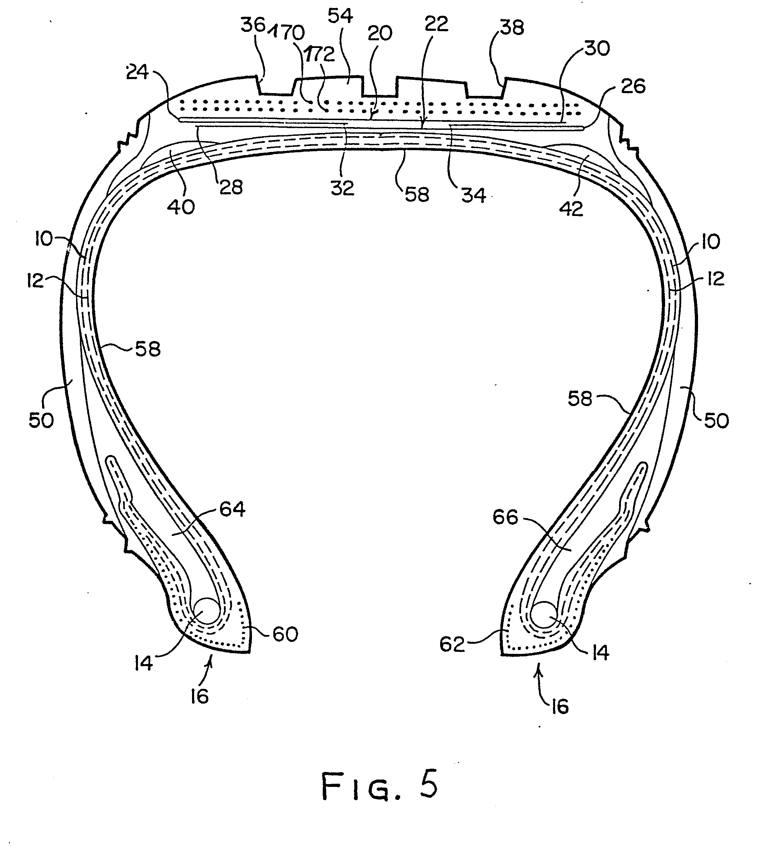

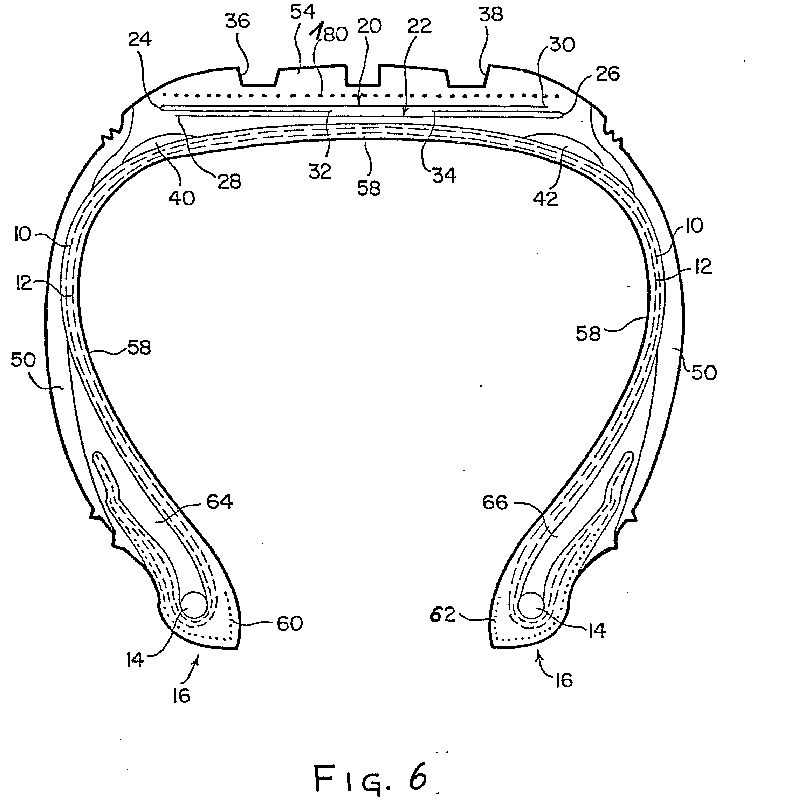

In the drawings (Fig. 5 and 6) like features or components of drawings (Fig. 1 - 4) have been identified with the same reference characters as in Fig. 1 - 4.

In Fig. 5 and 6 the belt plies 20 and 22 are shown folded in such a way that the folded edges 24 and 26 terminate radially inward of ply 20 and radially outward of ply 22. Other types of folds will become readily apparent to those skilled in the art. A particular alternate type of fold which has been found to be beneficial is a fold such that adjacent layers of belt plies are alternating in cord angle in the shoulder region of the tire.

Each cord of belt plies 20 and 22 is surrounded by a rubber composition having a 300 % modulus (tensile stress at 300 % elongation) of at least 1500 psi and preferably at least 1800 psi as measured by ASTM D 412.

Located radially outward of circumferential belt plies 20 and 22, and radially inward of tread 54, is a cap band having two plies 170 and 172 of textile cords. The cords in layers 170 and 172 are essentially parallel to the circumferential central plane of the tire. The width of the cap band is approximately equal to the width of belt. Examples of textile cords suitable are rayon, polyester, nylon and the like. Nylon is the preferred textile cord for use in the cap bands.

In Fig. 6 there is shown another embodiment of the invention. The tire in Fig. 6 is similar to that of Fig. 5 except the cap band in Fig. 6 has only one layer 180 of textile cords.

The tires of this invention can be manufactured with ordinary equipment normally used to build radial tires. The principal change from ordinary practice is to fold the edge of the rubber-coated fiberglass cord belt ply. The tires are built by applying a liner to a cylindrical metal drum, then the carcass plies are applied to the drum and the beads and bead filler set and the plies turned up around the beads. The sidewalls are then applied and the belt edge cushion gum. The first stage of the building process is then complete and the first step carcass is placed on a second stage building machine where the belts, and in a specific embodiment the cap band, and tread are applied. The fiberglass belts' plies are folded before being applied to the tire. The completed unvulcanized tire is then vulcanized in a metal mold under heat and pressure for a sufficient time to vulcanize the tire. Vulcanizing conditions, procedure and equipment are well-known in the art.

In order to evaluate the performance of the tires of this invention, they were tested on extended high-speed test. The test used is an extension of the FMVSS #109 test. The tire is tested at 100% rated load and 32 psi inflation pressure. The test begins with 2 hours at 50 mph warmup and then goes to 75 mph speed. The tire is tested for 1/2 hour at 75 mph and then every 1/2 hour the speed is increased by 5 mph. The test is terminated when the tire fails and the total miles to failure is recorded.

In order to further illustrate the present invention, the following examples are presented.

Example 1

Radial passenger tires, size 195/70HR14, were made according to this invention and tested by using the extended high-speed test mentioned above. The fiberglass cord used as the belt material was designated 15/3/0 and was calendered into ply stock having 14 ends per inch of glass cords at a ply thickness of 0.065 inches. A belt angle of 20 degrees was used. A one cm step-off at the belt edge was used in the tires with the folded edge being axially outward from the cut edge of the belt.

The tires were made using standard tire building equipment. The building of the tires was standard except the fiberglass belt plies were folded as in Fig. 1. The following table compares the tires of this invention with prior art tires. All data is an average of two tires.

TABLE

| Feature | High Speed Mileage |
|---|---|
| Cut fiberglass belts | 486 |
| Folded Fiberglass belts | 956 |

The above data shows that a dramatic and unexpected improvement in high-speed performance is realized by using the folded fiberglass belts of this invention. The tires of the invention were also found to have excellent durability and handling properties. The tire also, quite unexpectedly, performed well on a glass breakage test.

Example 2

Radial passenger tires, size 195/79HR14, made according to this invention and tested by using the extended high-speed test mentioned above. The fiberglass cord used as the belt material was designated 15/3/0 and was calendered into ply stock having 14 ends per inch of glass cords at a ply thickness of 0.065 inches. A belt angle of 20 degrees was used. A one cm step-off at the belt edge was used in the tires with the folded edge being exially outward from the cut edge of the belt. The tires also had a cap band comprising two plies of nylon cords. The cap band width was equal to the width of the belt. The tires were made using standard tire building equipment. The building of the tires was standard except the fiberglass belt plies were folded and the cap band plies were applied over the folded belt. The following table compares the tires of this invention with prior art tires. All data is on average of two tires.

TABLE

| Belt Feature | High Speed, Mileage |
|---|---|
| Cut steel belts - no cap band | 545 |
| Cut steel belts - 2 ply nylon cap band | 628 |
| Cut fiberglass belts - no cap band | 486 |
| Folded fiberglass belts - 2-ply nylon cap band | 964 |

The above data shows that a dramatic and unexpected improvement in high-speed performance is realized by using the folded fiberglass belts with nylon cap plies, according to this invention. Durability and handling properties of tires made according to this invention also were found to be excellent.

To those skilled in the tire engineering art, it was very unobvious to fold fiberglass plies and even more unobvious that these folded fiberglass belts would perform without severe glass breakage.

C l a i m s

---

1.  A pneumatic radial tire comprising two spaced inextensible beads, a ground contacting tread portion, a pair of individual sidewalls extending radially inward from the axial outer edges of said tread portion to join the respective beads, a carcass portion having at least one ply of rubberized cords lying essentially in radial planes wherein said cords are wrapped around said beads, a circumferential belt comprising at least two plies of rubber-coated fiberglass cords with the cords in each ply parallel to each other and at an angle to the circumferential central plane of the tire and with the tire cords in one ply extending in a direction opposite to the cords in the adjacent ply, wherein each said belt ply has at least one marginal edge that is folded.

2.  A tire of claim 1 wherein there is disposed radially outward of said circumferential belt and radially inward of said tread, a cap band having at least one layer of textile cords, said textile cords being essentially parallel to the circumferential central plane of the tire and said cap band having a width approximately equal to the width of the belt.

3.  A tire of claim 2 wherein the folded marginal edge of each said belt ply is in farther spaced relation from the circumferential central plane of the tire than the cut ends of the adjacent folded ply.

4. A tire of claims 1 - 3 wherein one marginal edge of each of said belt plies is folded such that adjacent layers of belt plies are alternating in angle in the shoulder region of the tire.

5. A tire of claims 1 - 4 wherein the folded end of each said belt ply terminates radially inward of the outermost belt ply and radially outward of the innermost belt ply.

6. A tire of claims 1 - 5 wherein said tread has a plurality of circumferential grooves with an outermost groove located near each shoulder of the tire and wherein the folded end of each belt ply terminates at a point axially inward of an outermost groove.

7. A tire of claims 1 - 6 wherein said belt plies have reinforcing cords running at a bias angle of from 15 to 25 degrees relative to the circumferential centerline of the tire.

8. A method of making a radial pneumatic tire comprising

(a) building a first-stage radial tire carcass;

(b) expanding said first-stage carcass to a toroidal shape;

(c) applying a circumferential belt assembly to said expanded carcass, wherein said belt assembly comprises at least two plies of rubber-coated fiberglass cords, wherein each ply has at least one marginal edge that is folded;

(d) applying a tread;

(e) shaping said unvulcanized tire construction;

(f) molding said tire construction;

(g) heating said tire construction under pressure for a time sufficient to vulcanize said tire.

- 16 -

9. A method of making a radial pneumatic tire comprising:

(a) building a first-stage radial tire carcass;

(b) expanding said first-stage carcass to a toroidal shape;

(c) applying a circumferential belt assembly to said expanded carcass, wherein said belt assembly comprises at least two plies of rubber-coated fiberglass cords, wherein each ply has at least one marginal edge that is folded;

(d) applying radially outward of said belt assembly a cap band having at least one layer of textile cords, said textile cords being essentially parallel to the circumferential central plane of the tire and said cap band having a width approximately equal to the width of the belt;

(e) applying a tread;

(f) shaping said unvulcanized tire construction;

(g) heating said tire construction under pressure for a time sufficient to vulcanize said tire.

FIG. 1

FIG. 3

0079588

FIG.2

FIG.4

FIG. 5

FIG. 6.